# EUROPEAN PATENT APPLICATION

(11) **EP 4 241 982 A1**
(43) Date of publication of application: **13.09.2023**
(21) Application number: 22161508.1
(22) Date of filing: 11.03.2022
(51) Int. Cl.: B32B 17/10

(54) **PROCESS FOR THE PRODUCTION OF INTERLAYER FILMS COMPRISING ETHYLENE VINYL ACETALS**

(71) Applicant: Kuraray Europe GmbH, 65795 Hattersheim (DE)
(72) Inventor: Becker, Greta, 55122 Mainz (DE); Haerth, Michael, 53859 Niederkassel (DE); Wenlik, Daniel, 65321 Heidenrod (DE)
(74) Representative: Janßen, Christian Oliver

(57) **Abstract**

The present invention is directed to a process for the production of interlayer films comprising ethylene vinyl acetals with improved crystallinity and optical properties.

## Description

The present invention is directed to a process for the production of interlayer films comprising ethylene vinyl acetals with improved crystallinity and optical properties.

Laminated safety glass (LSG) generally consists of two glass panels and an intermediate film which bonds the glass panels together. Plasticizer-containing, partially acetalized polyvinyl alcohol, in particular polyvinyl butyral (PVB), is predominantly used as material for the interlayer films. LSG is used for example as windshields or side windows in the automotive sector and as safety glass in the construction sector.

Ethylene vinyl acetals have also been introduced as polymer material for these interlayer films. However, since the requirements with regard to optical quality both in the architectural as well as in the automotive industry are becoming stricter with the introduction of larger glass areas in modern buildings as well as more sophisticated optical detection devices behind vehicle windshields, there is still a need in the industry for improved processes to produce glass laminates.

It has now surprisingly been found by the present inventors that when laminates with ethylene vinyl acetals-containing interlayer films are produced according to the methods known in the prior art, the interlayer films show a rather high degree of crystallinity, leading to a decreased optical quality of the final glass laminate. This crystallinity in the interlayer film can even be observed in cases where interlayer films with hardly any detectable crystallinity before the lamination process had been used. Thus, the crystallization appears to be influenced during the production of the glass laminate.

Therefore, the objective of the present invention was to provide a process for the production of laminates using ethylene vinyl acetal-containing interlayers with improved optical quality as expressed for examples by an improved yellowness index, improved turbidity, improved haze and/or an improved light transmission. Furthermore, the objective of the present invention was to provide a more economical and/or ecological process, e.g. in terms of purity, energy consumption and/or yield of the final laminate.

These and other objectives are surprisingly solved by the present invention.

The final step in the production of glass laminates is usually an autoclave step in which the glass/interlayer/glass sandwich is subjected to elevated temperatures and pressures. It has been found by the present inventors that the melting point of the ethylene vinyl acetals used for such interlayers is generally close to the temperatures conventionally used in the autoclave step. Thus, the ethylene vinyl acetal material in the interlayer (partially) melts during the autoclave step. Subsequent cooling of the final laminate apparently leads to partial crystallisation of the ethylene vinyl acetal in the interlayer. This partial crystallisation is deemed to be responsible for the decrease in optical quality of the laminate as demonstrated, for example, by an increase in turbidity and yellowness index. This decrease in optical quality can be avoided to a large extend by either lowering the temperature in the autoclave step to a temperature below the melting temperature of the ethylene vinyl acetal or by cooling the final laminate at high cooling rates and thus, reducing crystallisation in the interlayer.

Now therefore, a first aspect of the present invention concerns a process for the preparation of a laminated glass comprising consecutive steps of
a. providing a sandwich structure comprising a first sheet of glass, an interlayer film comprising an ethylene vinyl acetal and a second sheet of glass, in that order,
b. optionally, producing a pre-laminate from the sandwich structure of step a,
c. producing a laminate by heating the sandwich structure of step a or the pre-laminate of step b in an autoclave, and
d. cooling the laminate of step c,
wherein the temperature Tc in the autoclave step of step c is below the melting temperature of the ethylene vinyl acetal or
wherein temperature Tc is equal to or above the melting temperature of the ethylene vinyl acetal and the cooling rate Qd of the cooling of step d is equal to or more than 10 K/min.

The cooling of the laminate after the autoclave step can be affected either by cooling the autoclave itself, e.g. by flooding the same with cold air or by electronic means. Alternatively, the laminate can be quickly taken from the autoclave and cooled by conventional means.

However, it is technically more convenient to conduct the autoclave process at a temperature below the melting temperature of the ethylene vinyl acetal and thus, avoid a melt/crystallization cycle. It has been surprisingly found that a stable lamination can be affected even at these rather low temperatures in the autoclave.

Accordingly, a preferred embodiment concerns a process wherein the temperature Tc in the autoclave step of step c is below the melting temperature Tm of the ethylene vinyl acetal. Since the melting of a polymer generally occurs not a sharp melting point but over a temperature range, the autoclave step is preferably conducted at a Temperature Tc of at least 10 ºC below the melting temperature Tm of the ethylene vinyl acetal. It can also preferably be conducted at least 15 or even at least 20 ºC below Tm. Also preferably, it can be conducted at a temperature Tc in the autoclave step c from 90 to 130 ºC.

There is no particular limitation on the method of manufacturing the interlayer film. Specifically, a starting resin composition may be formed into a film by extrusion, blow molding, injection molding, solution casting or the like, most preferably by melt extrusion. The resin temperature at the time of the melt extrusion is preferably 170 to 250 °C, more preferably 180 to 240 °C, and still more preferably 190 to 230 °C. If the resin temperature becomes too high, the ethylene vinyl acetal resin can undergo partial decomposition.

In case the resin sheets used as interlayers comprising an ethylene vinyl acetal are produced by melt extrusion, (partial) crystallization can also occur after this melt extrusion step. Thus, the interlayer film is preferably produced by melt extrusion followed by a cooling step with a cooling rate Qe of equal to or more than 10 K/min, more preferably equal to or more than 20 K/min, 50 K/min, 75 K/min, or even equal to or more than 100 K/min. Such cooling rates can be achieved, for example, by extruding the resin sheets into a water bath.

Preferably, the inventive process comprises a step b wherein a pre-laminate is produced from the sandwich structure of step a using two sets of rollers at a temperature of 30 to 70 ºC. More preferably, the rollers are nip rollers. Alternatively, the pre-laminate can be formed using the so-called vacuum bag method.

The ethylene vinyl alcohol used in the production of the ethylene vinyl acetals can be obtained by copolymerizing ethylene and a vinyl acetate and hydrolysing the obtained copolymer. In the hydrolysation reaction, a conventionally known alkali catalyst or an acid catalyst can be used and among them, a hydrolysation reaction using methanol as a solvent and caustic soda (NaOH) catalyst is convenient. Alternatively, it can be commercially obtained.

Although there is no particular limitation to the method for producing the ethylene vinyl acetals used in this embodiment of the present invention, they can be produced by a method in which an aldehyde is added to the ethylene vinyl alcohol solution under acidic conditions and subjected to the acetalization reaction. The reaction product obtained after the acetalization reaction is neutralized with alkali, and then washed with water to obtain the ethylene vinyl acetal. The catalyst for carrying out the acetalization reaction is not particularly limited, and any organic acid or inorganic acid may be used. Examples thereof include acetic acid, para toluenesulfonic acid, nitric acid, sulfuric acid, hydrochloric acid, carbonic acid, and the like.

Preferably, the degree of acetalization of the ethylene vinyl acetal used in the present invention is from 1 mol% to 80mol%, also preferably 5 mol% or more and less than 70 mol%, more preferably the lower limit of the degree of acetalization is more than 6 mol%, more than 7 mol%, more than 8 mol%, more than 9 mol%, and most preferably more than 10 mol%. Further, the upper limit of the degree of acetalization is more preferably 50 mol% or less, 45 mol% or less, and most preferably less than 40 mol%. Specifically, the degree of acetalization is from 30 to 45 mol%.

Preferably, the acetal groups individually have 1 to 7 carbon atoms, i.e. they derive from the condensation reaction with aldehydes with 1 to 7 carbon atoms. More preferably, they derive from the list consisting of methanal (formaldehyde), acetaldehyde, n-propanal (propionaldehyde), n-butanal (butyraldehyde), iso-butanal (2-methyl-1-propanal, iso-butyraldehyde), n-pentanal (valeraldeyhde), iso-pentanal (3-methyl-1-butanal), sec-pentanal (2-methyl-1-butanal), tert-pentanal (2,2,dimethyl-1-propanal), n-hexanal (capronaldehyde), iso-hexanal (2-methyl-1-pentanal, 3-methyl-1-pentanal, 4-methyl-1-pentanal), 2,2-dimethyl-1-butanal, 2,3-dimethyl-1-butanal, 3,3-dimethyl-1-butanal, 2-ethyl-1-butanal, n-heptanal, 2-methyl-1-hexanal, 3-methyl-1-hexanal, 4-methyl-1-hexanal, 5-methyl-1-hexanal, 2,2-dimethyl-1-pentanal, 3,3-dimethyl-1-pentanal, 4,4-dimethyl-1-pentanal, 2,3-dimethyl-1-pentanal, 2,4-dimethyl-1-pentanal, 3,4-dimethyl-1-pentanal, 2-ethyl-1-pentanal, 2-ethyl-2-methyl-1-butanal, 2-ethyl-3-methyl-1-butanal, 3-ethyl-2-methyl-1-butanal, cyclohexylaldehyde and benzaldehyde. Most preferably, they derive from the condensation reaction with iso-butyraldehyde or n-butyraldehyde.

Preferably, the ethylene vinyl acetal has a degree of acetalization of from 30 to 50 mol%.

The vinyl alcohol content and vinyl acetate content of ethylene vinyl acetals were determined in accordance with DIN ISO 3681 (Acetate content) and DIN ISO 53240 (PVA content). The vinyl acetal content can be calculated as the remaining portion from the sum of vinyl alcohol content and vinyl acetate content determined in accordance with DIN ISO 3681/53240 and the ethylene needed to make one hundred. The degree of acetalization can be calculated from the amount of vinyl acetal content divided by the sum of vinyl alcohol content, vinyl acetal content and vinyl acetate content. Conversion from % by weight into mol % is achieved by formulas known to the person skilled in the art.

Preferably, the ethylene vinyl acetal comprises ethylene units in the range of 25 to 60 mol%. More preferably, the percentage of ethylene units in the ethylene vinyl acetal 30 to 55 mol%, and still more preferably 35 to 50 mol%.

The ethylene content of the ethylene vinyl acetal resin is measured by NMR spectroscopy. First, the ethylene vinyl acetal resin is dissolved in ethanol and a 2 N hydrochloride hydroxylamine solution and hydrochloric acid are added, and the mixture is stirred under reflux with a condenser in a water bath for 4 hours, and after cooling, ammonia water is added. Afterwards, methanol is added and the polymer is precipitated, washed and dried to obtain the ethylene vinyl alcohol copolymer. Then, the ethylene vinyl alcohol copolymer is dissolved in DMSO (dimethyl sulfoxide) at 120 °C, cooled to room temperature, and then N,N-dimethyl-4-aminopyridine and acetic anhydride are added thereto, followed by stirring for 1 h, followed by precipitation with ion-exchanged water and acetone, and drying to obtain an ethylene vinyl acetate copolymer. The polymer is dissolved in DMSO-d6 and measured by a proton NMR spectrometer of 400 MHz. The spectrum obtained was integrated 256 times. The molar ratio of the ethylene units of the ethylene vinyl alcohol copolymer is calculated from the intensity ratio of the methine proton (peak of 1.1 to 1.9 ppm) derived from the ethylene unit and the vinyl acetate unit, and the terminal methyl proton (peak of 2.0 ppm) derived from the vinyl acetate unit. Note that, since the ethylene unit is not affected by the acetalization reaction, the molar ratio (n) of the ethylene unit of the ethylene vinyl alcohol copolymer before the acetalization reaction is equal to the molar ratio (n) of the ethylene unit of the ethylene vinyl acetal resin obtained after the acetalization reaction.

Also preferably, the interlayer comprises from 5 to 45 pbw of at least one plasticizer. Preferred plasticisers are diesters of aliphatic diols, in particular of aliphatic polyether diols and/or polyether polyols with aliphatic carboxylic acids, preferably diesters of polyalkylene oxides, in particular diesters of diethylene glycol, triethylene glycol and tetraethylene glycol with aliphatic (C6-C10) carboxylic acids, preferably 2-ethyl butyric acid and n-heptanoic acid, also diesters of aliphatic or aromatic (C2-C18) dicarboxylic acids, preferably adipine, sebacine and phthalic acid, with aliphatic (C4-C12) alcohols, preferably dihexyl adipate, phthalates, trimellitates, phosphates, fatty acid esters, in particular triethylene glycol-bis-(2-ethyl butyrate), triethylene glycol ethyl hexanoate (3G8), aromatic carboxylic acid esters, in particular dibenzoates and/or hydroxycarboxylic acid esters, or polypropylene glycols. Also preferred is the Monociser range of benzoates commercially available from DIC Corporation. Also preferred is dibutoxyethoxyethyl sebacate. It may contain a single plasticiser as well as mixtures of plasticisers both of different and identical composition.

Also optionally, the interlayer film according to the present invention comprises other components than the ethylene vinyl acetals as described above. For example, it may contain antioxidants, optical brighteners, stabilisers, processing aids, organic or inorganic nanoparticles, pyrogenic silicic acid, silica, surface-active substances and/or rheological modifiers.

Laminates with interlayers comprising ethylene vinyl acetals as produced according to the present invention show an optical quality, especially with regard to the yellowness and turbidity which have not been found in the prior art. Thus, a further aspect of the present invention concerns laminated glass obtained in a process according to the present invention.

Preferably, the turbidity dL* of the laminated glass is equal to or less than 15, even more preferably equal to or less than 10, 7.5, 5.0, 2.5 and specifically equal to or less than 1.0.

Also preferably, the yellowness index YI of the laminated glass is equal to or below 2.5, more preferably below 1.0 and specifically equal to or below 0.5.

The laminated glass can be produced by inserting and laminating the interlayer film between two or more sheets of glass made of inorganic glass or organic glass. Although there is no particular limitation on the glass to be laminated with the interlayer film for laminated glass of the present invention, a conventionally known organic glass such as polymethyl methacrylate or polycarbonate can be used in addition to or instead of inorganic glass such as float glass, reinforced glass, netted glass, or heat ray absorbing plate glass. Although there is no particular limitation on the thickness of the glass, it is preferably 1 to 10mm, more preferably 2 to 6mm.

### Examples

### Preparation of pellets of ethylene vinyl alcohol copolymer

A solution of an ethylene vinyl alcohol copolymer containing 44 mol% of ethylene units, 60 mass parts of methanol, and 40 mass parts of water at a saponification degree of 99.98 mol% was continuously supplied from the uppermost stage of a shelf column having a tower diameter of 0.3 m and a 10 stages, and water vapor was blown from the lowermost stage, such that the ethylene vinyl alcohol copolymer solution and water vapor were brought into contact with each other in a countercurrent mode. The temperature in the tower was 130º C and the pressure in the tower was 0.3 MPa. The moisture-containing ethylene vinyl alcohol copolymer thus obtained was drawn out from the tower bottom. The temperature of the obtained water-containing ethylene vinyl alcohol copolymer was 120 °C and the water content was 52.4% by mass.

The moisture-containing ethylene vinyl alcohol copolymer was supplied at a rate of 42 kg/hr to a biaxial extruder with a backslit and extruded from a dice with a pore size of 3.0 mm and 8 holes using the following conditions: the extruded melt was cut with a hot cutter with two blades at a distance of 0.05 mm from the dice to obtain a flat spherical pelleted ethylene vinyl alcohol copolymer. The flow rate of the cutter circulating water was 300 liters/min, and the rotation number of the cutter blade was 3000 rpm. The resin temperature (outlet) was 95 °C and the moisture content was 34% by mass.

The ethylene vinyl alcohol copolymer pellets were washed with water at 50 °C until the sodium acetate content became 0.002% by mass. After filtration, ethylene vinyl alcohol copolymer having a flat spherical pellet shape was obtained.

### Preparation of ethylene vinyl acetal copolymer

### Example 1

100 parts by mass of the ethylene vinyl alcohol copolymer pellets were dispersed in 377 parts by mass of water and 29.2 parts by mass of isobutyraldehyde was added. The obtained dispersion was heated to 60 °C under stirring. Stirring was continued for 2 h and thereafter, 10 parts by mass of 1M hydrochloric acid was added to the dispersion. After a further 2 hours, 40 parts by mass of 1M hydrochloric acid was added, and stirring continued for 4 h. Thereafter, 75 parts by mass of 1M sodium hydroxide was added to the dispersion and stirring continued at 60 °C for an additional 8 h. The crude product was collected by filtration, and 500 parts by mass of ion-exchanged water was added. After three washing/filtration cycles at 60 °C the ethylene vinyl acetal was obtained.

### Examples 2 to 5

*Examples 2 to 5* were obtained in the same manner as in Example 1, except that the amount and/or type of aldehyde added were changed as shown in Table 1.

### Preparation of resin sheets

### Example 1

The ethylene vinyl acetal of example 1 above was melt-kneaded using a laboplast mill (manufactured by Toyo Seiki Seisakusho Co., Ltd., "4M150") at a chamber temperature of 180 °C and a rotation speed of 60 rpm for 2 min. Afterwards, the chamber contents were taken out and cooled to obtain a melt-kneaded product. The resulting melt-kneaded product was compressed at 180 ºC and a pressure of 100 kgf per cm² (100 MPa) for 5 min and afterwards, cooled with cooling speed of 100 K/min. The resin sheets thus obtained had a thickness of 0.8 mm.

### Examples 2 and 4

Prepared in the same manner as described in Example 1.

### Example 3

Prepared in the same manner as described in Example 1 except that 11.5 phr dibutoxyethyl adipate (DBEA) were added during melt-kneading.

### Example 5

The ethylene vinyl acetal of example 4 above was melt-kneaded using a HAAKE^{™} Rheomix OS Lab Mixer for the HAAKE^{™} PolyLab^{™} OS system (manufactured by ThermoFisher Scientific) at a chamber temperature of 160 °C and a rotation speed of 60 rpm for 10 min. Afterwards, the chamber contents were taken out and cooled to obtain a melt-kneaded product.

The resulting melt-kneaded product was compressed at 180 ºC at a pressure of 100 kgf per cm² (100 MPa) for 5 min and cooled at a cooling rate of 6 K/min. The resin sheet had a thickness of 0.8 mm.

### Preparation of laminates

### Examples 1 to 5

The obtained resin sheets were laminated between two 2.1 mm glass sheets (SGG Planiclear^{®}) using a vacuum bag process (90 °C, 20 min) to obtain pre-laminates. The laminate size was 15 x 10 cm. The subsequent autoclave process was performed with a heating and cooling rate of 5 K/min, a pressure of 12 bar, and holding time of 60 min at a temperature of 125 °C or 140 °C, respectively. The laminates were stored for at least 12 h at room temperature after the autoclave process.

### Measurement methods

### Turbidity (dL*)

Turbidity of the interlayer was measured as dL* with a HunterLab LabScan XE (commercially available by Hunter Associates Laboratory, Inc.) with Illuminant D65 and observer angle 10°. The value for dL* was calculated as L* of the laminate minus L* of two glass plies of the same thickness without interlayer.

### Yellowness Index (YI)

Yellowness Index of the interlayer was measured with a HunterLab ColorQuest XE Spectrophotometer (commercially available from Hunter Associates Laboratory, Inc.) according to ASTM E 313 (Illuminant C, observer angle 2°).

### Melting Temperature (Tm)

DSC measurements were performed on a calorimeter (NETSCH DSC 214 Polyma) under inert gas atmosphere with a heating and cooling rate of 10 K/min and a temperature range between -30 °C and 200 °C. The melting temperature Tm was taken from the second run as the minimum in the enthalpy curve.

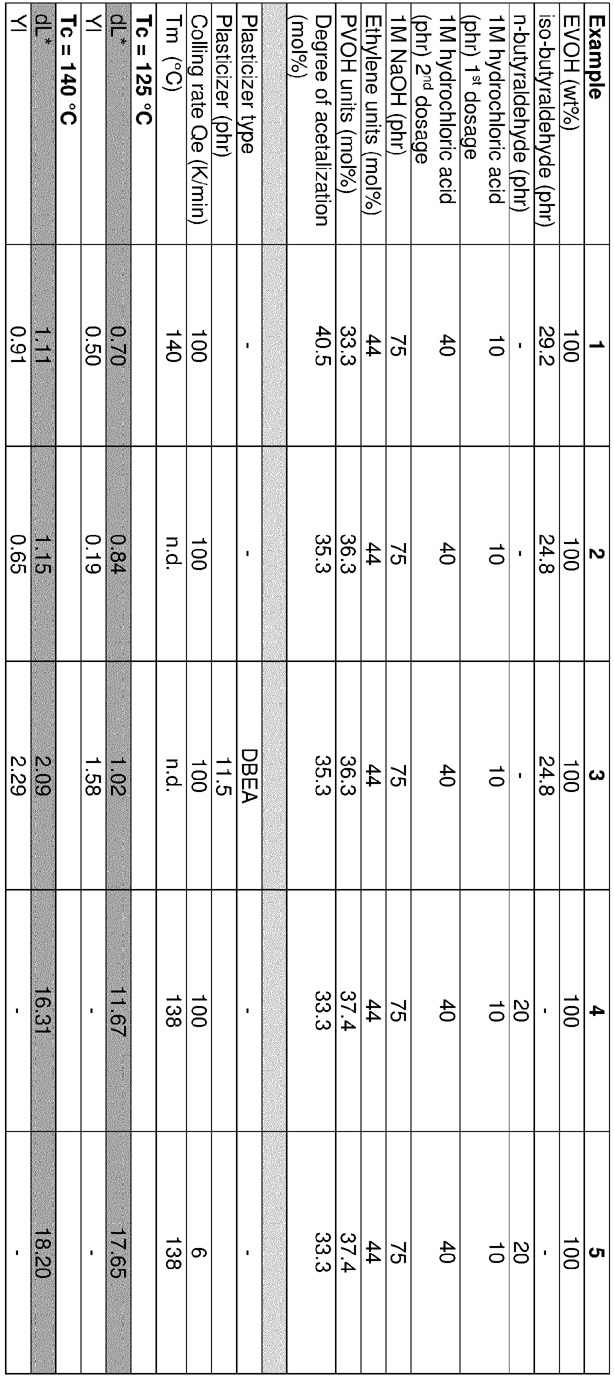

## Claims

1. A process for the preparation of a laminated glass comprising consecutive steps of
a. providing a sandwich structure comprising a first sheet of glass, an interlayer film comprising an ethylene vinyl acetal and a second sheet of glass, in that order,
b. optionally, producing a pre-laminate from the sandwich structure of step a,
c. producing a laminate by heating the sandwich structure of step a or the pre-laminate of step b in an autoclave, and
d. cooling the laminate of step c,
wherein the temperature Tc in the autoclave step of step c is below the melting temperature Tm of the ethylene vinyl acetal or
wherein temperature Tc is equal to or above the melting temperature Tm of the ethylene vinyl acetal and the cooling rate Qd of the cooling of step d is equal to or more than 10 k/min.

2. The process of claim 1 wherein the temperature Tc in the autoclave step of step c is below the melting temperature Tm of the ethylene vinyl acetal.

3. The process according to claim 1 or 2 wherein the temperature Tc in the autoclave step c is at least 10 ºC below the melting temperature Tm of the ethylene vinyl acetal.

4. The process according to claim 1 wherein the temperature Tc in the autoclave step c is from 90 to 130 ºC.

5. The process according to any one of the claims above wherein the interlayer film is produced by melt extrusion followed by a cooling step with a cooling rate Qe of equal to or more than 10 K/min.

6. The process according to claim 5 wherein the cooling rate Qe is equal to or more than 50 k/min.

7. The process according to any one of the claims above comprising a step b wherein a pre-laminate is produced from the sandwich structure of step a using two sets of rollers at a temperature of 30 to 70 ºC.

8. The process according to any one of the claims above wherein the ethylene vinyl acetal comprises ethylene units in the range of 25 to 60 mol%.

9. The process according to any one of the claims above wherein the interlayer comprises from 5 to 45 pbw of at least one plasticizer.

10. The process according to any one of the claims above wherein the ethylene vinyl acetal has a degree of acetalization of from 30 to 50 mol%.

11. The process according to any one of the claims above wherein the ethylene vinyl acetal is an n-butyral or a iso-butyral acetal.

12. A laminated glass obtained in a process according to any one of claims 1 to 11.

13. The laminated glass according to claim 12 wherein the turbidity dL* is equal to or less than 15.

14. The laminated glass according to claim 13 wherein the turbidity dL* is equal to or less than 1.0.

15. The laminated glass according to any one of claims 12 to 14 wherein the yellowness index Yl is equal to or below 0.5.
